# EUROPÄISCHE PATENTSCHRIFT

(11) **EP 0 825 050 B1**
(45) Veröffentlichungstag und Bekanntmachung des Hinweises auf die Patenterteilung: **02.05.2002**
(21) Anmeldenummer: 97113556.1
(22) Anmeldetag: 06.08.1997
(51) Int. Cl.: B60J 7/10, B62D 33/02

(54) **Runge zwischen einem Obergurt und einem Gestellrahmen eines Fahrzeugs**
Stanchion between an upper boom and the platform frame of a vehicle
Rancher entre une membrure supérieure et le châssis d'un véhicule

(30) Priorität: 21.08.1996 DE 29614477 U
(43) Veröffentlichungstag der Anmeldung: 25.02.1998
(73) Patentinhaber: MBFL Fliegl GmbH, 07819 Triptis (DE)
(72) Erfinder: Fliegl, Helmut, 84556 Kastl (DE)
(74) Vertreter: Schieschke, Klaus, Dipl.-Ing.

(56) Entgegenhaltungen:
- EP-A- 0 047 022
- EP-A- 0 335 427
- EP-A- 0 426 484
- AT-B- 380 837
- DE-C- 3 538 704
- DE-U- 8 803 130

## Beschreibung

Die Erfindung bezieht sich auf eine Runge zwischen einem Obergurt und einem Gestellrahmen eines Fahrzeugs, insbesondere eines Speditionsfahrzeugs, gemäß dem Oberbegriff des Anspruchs 1

Als allgemeiner Stand der Technik ist es bereits bekannt, derartige Rungen fest mit dem Obergurt und dem Gestellrahmen zu verbinden und sie in dieser fixierten Stellung zu belassen. Hieraus resultieren etliche Nachteile, da keine Anpassung an die Abmessungen der zu transportierenden Behälter vorgenommen werden kann. Im Bedarfsfall müssen die Rungen damit vom Obergurt und dem Gestellrahmen des Fahrzeugs, insbesondere eines Speditionsfahrzeugs, gelöst und an anderer Stelle wieder fixiert werden.

Zum Stand der Technik zählt weiterhin eine Stütze und eine an der Ladefläche eines Lastfahrzeuges über eine lösbare Schwenkverbindung abnehmbar angebrachte Runge (AT-B-380837). Die Runge ist hierbei an der Ladefläche fixierbar und seitlich am Obergurt geführt. Weiterhin ist eine Verriegelungsvorrichtung zum Arretieren dieser Runge im Gestellrahmen vorgesehen, welcher einen schwenkbaren Hebel besitzt, dessen Stirnseite in arretierter Schließstellung in einer Sicke einer U-förmigen Schiene einlagerbar ist. Die U-förmige Schiene befindet sich bei dieser bekannten Konstruktion an einer genau definierten Stelle, so dass es technisch nicht möglich ist, die Runge an beliebiger Stelle in dem Außenprofil zu arretieren.

Weiterer Stand der Technik bezieht sich auf eine Runge, welche an beliebiger Stelle in dem Außenprofil des Gestellrahmens unter Vermeidung seitlicher oberer und unterer Zusatzteile arretierbar ist (EP 0 426 484 A2). Hierzu weist eine Verriegelungsvorrichtung einen schwenkbaren Hebel auf, dessen Stirnseite in arretierter Schließstellung in einer Ausnehmung eines Außenprofils arretiert eingelagert ist. Dieses Außenprofil besitzt einen horizontalen Schlitz, in welchen sich der vordere Bereich der Verriegelungsvorrichtung einlagert und weitgehend den vorderen Bereich des Außenprofils überdeckt. Damit ist eine hohe Passgenauigkeit erforderlich, um die Runge in verriegelter Stellung funktionssicher zu halten.

Als Stand der Technik, von dem die vorliegende Erfindung ausgeht, ist eine verstellbare Säule für ein Kraftfahrzeug mit verschiebbarer Abdeckung bekannt (EP 0 335 427 B1). Die Säule kann in der Längsrichtung einer Dachkonstruktion verschoben werden. Sie weist an ihrem unteren Ende einen Haken auf, welcher mit einem Teil der Bodenkonstruktion zusammenwirkt, die beispielsweise ein Karosserieaufbau sein kann. An der Säule ist ein Hebel vorgesehen, welcher eine Stütze aufweist, die auf der Bodenkonstruktion aufliegt. Dieser Hebel kann zwischen einer Position, in der die Säule verriegelt ist und einer Position, in der die Säule verschoben werden kann, bewegt werden.

Der Hebel besteht aus zwei beidseitig der Säule verlaufenden Längsarmen, welche durch Stege miteinander verbunden sind. Im unteren Bereich befindet sich der Haken, welcher in eine Rille oder in entsprechende Teile im Seitenprofil der Bodenkonstruktion eingreifen kann. Nach dem Eingriff dieses Hakens in den entsprechenden Bereich der Bodenkonstruktion ist die Säule verriegelt.

Demgegenüber besteht die Aufgabe der vorliegenden Erfindung darin, eine Runge der eingangs genannten Art zu schaffen, welche bei geringerem Herstellungsaufwand auch bei rauher Betriebsweise eine einwandfreie verriegelte Position selbst über eine lange Lebensdauer aufweist.

Diese Aufgabe wird mit den Merkmalen im kennzeichnenden Teil des Anspruchs 1 gelöst. Dadurch, dass die Stirnseite des Hebels in eine Sicke des horizontalen Schenkels des Außenprofils eingreift und außerdem ein den gesamten vertikalen Schenkel in Schließstellung umgreifender Flansch vorgesehen ist, ergibt sich eine auch bei rauher Betriebsweise einwandfreie Verriegelung der Runge in dem Außenprofil.

Die Runge ist mit der Verriegelungsvorrichtung versehen, welche beispielsweise einen schwenkbaren Hebel aufweist, dessen Stirnseite in arretierter Schließstellung in ein als Sicke ausgebildetes durchlaufendes Profil des horizontalen Schenkels des Außenprofils einlagerbar ist. Die Runge läßt sich in funktionsrichtiger Lage in dieser Position fixieren und kann damit optimal an die zu transportierende Ladung angepaßt werden.

Die Runge wird an dieser Stelle befestigt, indem sie an das Außenprofil gedrückt wird und dieses von unten umklammert. Der Hebel wird nach oben geklappt und verriegelt. Geöffnet wird die Runge, indem man den Hebel entriegelt und nach unten zieht. Die Runge wird von der Umklammerung des Außenprofils gelöst und weggezogen; die Runge kann nun an dem Obergurtprofil beliebig seitlich verschoben werden. Sie läßt sich an jeder beliebigen Stelle befestigen.

Die erfindungsgemäße stufenlos verschiebbare Runge besitzt folgende Vorteile:
Sie kann dort positioniert werden, wo sie am wenigsten stört,
   - infolge der einfachen Bauweise reduziert sich erheblich der Wartungsaufwand,
      durch die elastische Bauweise kann die erfindungsgemäße Runge Stoßbelastungen aufnehmen,
   - die stufenlos verschiebbare Runge ermöglicht eine einfache Bedienung, ein Verklemmen einer Rungentasche wird vermieden,
   - es entfallen jegliche seitliche obere und/oder untere Zusatzanbauteile.

Vorteilhafte Weiterbildungen ergeben sich aus den Unteransprüchen.

Die Erfindung wird nachfolgend anhand eines in der Zeichnung dargestellten Ausführungsbeispiels näher beschrieben. In der Zeichnung zeigen:
- Fig. 1: eine Seitenansicht einer Runge in Offen- bzw. in Schließstellung;
- Fig. 2a u. Fig. 2b u. Fig. 2c: zwei Seitenansichten und eine Vorderansicht einer Runge mit geöffneter bzw. geschlossener Verriegelungsvorrichtung;
- Fig. 3: einen Querschnitt durch das als Bodenprofil mit Längssicke ausgebildete Außenprofil eines Gestellrahmens.

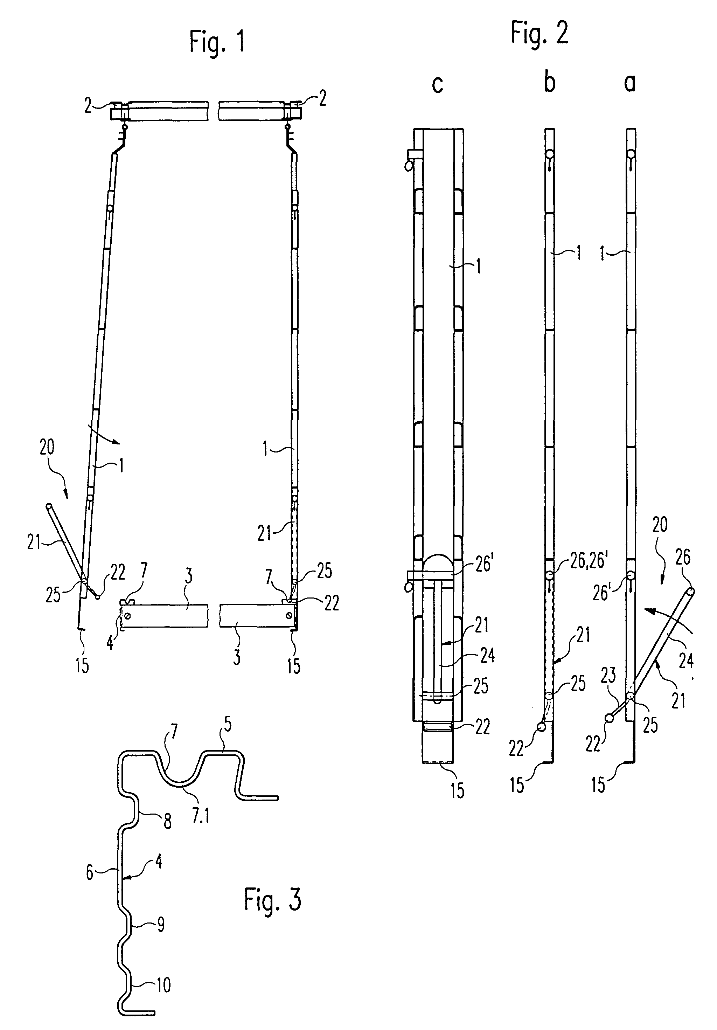

Fig. 1 zeigt eine Runge 1 zwischen einem Obergurt 2 und einem Gestellrahmen 3 eines Fahrzeugs, insbesondere eines Speditionsfahrzeugs, in Vorderansicht mit geschnittenem Gestellrahmen. Die linke Darstellung nach Fig. 1 bezieht sich auf eine Position mit geöffneter Runge, in welcher diese in der Zeichenebene entsprechend den baulichen Erfordernissen in dem Obergurt 2 verschoben werden kann. In funktionsrichtiger Lage wird die Runge über eine Verriegelungsvorrichtung 20 mit einem als Bodenprofil ausgebildeten Außenprofil 4 des Gestellrahmens 3 gemäß der rechten zeichnerischen Darstellung nach Fig. 1 verriegelt.

Fig. 2 zeigt in den Fig. a, b und c, daß in der Runge 1 in einer Lagerstelle 25 ein schwenkbarer Hebel 21 gelagert ist, welcher auf der einen Seite ein kürzeres Hebelteil 23 mit einer verdickten Stirnseite 22 aufweist. Auf der anderen Seite der Lagerstelle 25 besitzt der schwenkbare Hebel 21 einen längeren Hebelteil 24 mit Betätigungsgriff und Verriegelung. Die Fig. 2a zeigt die Schließvorrichtung 20 in geöffneter Stellung. Wird nun gemäß Fig. 2b der Hebel 21 entgegen dem Uhrzeigersinn geschwenkt, so befindet er sich in Schließstellung im Profil der Runge 2 und wird dort durch ein Gegenelement 26' im Zusammenwirken mit der Verriegelung 26 arretiert. Der verdickten Stirnseite 22 des Hebels 21 liegt nach Fig. 2b ein Flansch 15 der Runge 1 im Abstand gegenüber.

Wie insbesondere aus Fig. 1, linke Darstellung und Fig. 3 ersichtlich, ist das Außenprofil 4 als Winkelprofil ausgebildet mit einem horizontalen Schenkel 5 mit durchlaufendem Profil 7 und einem vertikalen Schenkel 6. Das durchlaufende Profil 7 des Horizontalschenkels 5 ist als Längssicke mit einem abgerundeten unteren Bereich 7.1 ausgebildet und dient zur Arretierung der seitlich verschiebbaren Runge mit Hilfe der Schließvorrichtung 20. Der vertikale Schenkel 6 weist z.B. mehrere durchlaufende Profile 8, 9, 10 auf.

In Schließstellung hintergreift der Flansch 15 der Runge 1 den vertikalen Schenkel 6 des Außenprofils 4 gemäß Fig. 1, rechte Darstellung, wobei in dieser Position die verdickte Stirnseite 22 des Hebels 21 in der Sicke 7 gelagert ist. In dieser Schließstellung ist nach Fig. 1, rechte Darstellung der Hebel 21 durch die Verriegelung 26 im Profil der Runge 1 über das Gegenelement 26' funktionssicher verriegelt.

Geöffnet wird die Runge 1, indem der Hebel 21 entriegelt, d.h. im Uhrzeigersinn von der Position Fig. 2b in die Position Fig. 2a geschwenkt wird. Die Runge 1 kann nunmehr vom Außenprofil 7 weggezogen und im Obergurtprofil 2 seitlich verschoben werden. Sie läßt sich anschließend wieder an jeder beliebigen Stelle in vorgenannter Weise befestigen.

Es liegt damit eine stufenlos verschiebbare Runge 1 vor, welche im Zusammenwirken mit dem Außenprofil 7 und der Schließvorrichtung 20 in funktionsgerechter Lage einwandfrei positionierbar ist.

## Patentansprüche

1. Runge (1) zwischen einem Obergurt (2) und einem Gestellrahmen (3) eines Fahrzeugs, insbesondere eines Speditionsfahrzeugs,
wobei die Runge (1) seitlich verschiebbar am Obergurt (2) geführt ist,
eine Verriegelungsvorrichtung (20) zum Arretieren der seitlich verschiebbaren Runge (1) am Gestellrahmen (3) vorgesehen ist,
wobei die Verriegelungsvorrichtung (20) einen schwenkbaren Hebel (21) aufweist, dessen Stirnseite (22) in arretierter Schließstellung im Außenprofil (4) arretiert eingelagert ist,
die Runge (1) an beliebiger Stelle in dem Außenprofil (4) des Gestellrahmens (3) unter Vermeidung seitlicher oberer und/oder unterer Zusammenbauteile arretierbar ist, und
wobei der Hebel (21) in der Runge (1) gelagert ist und die Lagerstelle (25) zwischen einem kurzen Hebelteil (23) mit verdickter Stirnseite und einem längeren Hebelteil (24) mit Betätigungsgriff und Verriegelung (26) liegt,
**dadurch gekennzeichnet,**
**dass** zur Arretierung die Stirnseite (22) des Hebels (21) in eine in einem horizontalen Schenkel (5) angeordnete Sicke (7) des Außenprofils (4) eingreift, und
**dass** der verdickten Stirnseite (22) des Hebels (21) im Abstand ein den gesamten vertikalen Schenkel (6) des Außenprofils (4) in Schließstellung umgreifender Flansch (15) der Runge (1) gegenüberliegt.

2. Runge nach Anspruch 1,
**dadurch gekennzeichnet,**
**daß** der Hebel (21) in arretierter Schließstellung im Profil der Runge (1) liegt.

## Claims

1. Stanchion (1) between an upper boom (2) and a chassis (3) of a vehicle, in particular a carrier vehicle,
wherein the stanchion (1) can be displaced laterally at the upper boom (2),
a locking device (20) is provided for arresting the laterally displaceable stanchion (1) at the chassis (3),
wherein the locking device (20) comprises a pivotable lever (21), the end face (22) of which is embedded in arrested fashion in the external profile (4) in the arrested locked position,
the stanchion (1) can be arrested at any desired point in the external profile (4) of the chassis (3), while avoiding lateral upper and/or lower assembly components, and
wherein the lever (21) is mounted in the stanchion (1), and the bearing point (25) lies between a short lever part (23) with a thickened end face and a longer lever part (24) with actuating handle and lock (26),
**characterised in**
**that** the end face (22) of the lever (21) engages in a bead (7), disposed in a horizontal limb (5), of the external profile (4) for arresting purposes,
and
**that** a flange (15), embracing the entire vertical limb (6) of the external profile (4) in the locked position, of the stanchion (1) lies at a spacing opposite the thickened end face (22) of the lever (21).

2. Stanchion according to Claim 1,
**characterised in**
**that** the lever (21) lies in the profile of the stanchion (1) in the arrested locked position.

## Revendications

1. Ridelle (1) entre une membrure supérieure (2) et un cadre support (3) d'un véhicule, en particulier un véhicule de transport, dans laquelle
la ridelle (1) est montée contre la membrure supérieure (2) de manière à pouvoir coulisser latéralement,
un dispositif de verrouillage (20), destiné à bloquer la ridelle (1) susceptible de coulisser latéralement, est prévu contre le cadre support (3),
le dispositif de verrouillage (20) comporte un levier (21) pivotant, dont la face frontale (22), dans la position de fermeture bloquée, est logée de manière bloquée dans le profilé extérieur (4),
la ridelle (1) peut être bloquée dans une zone quelconque dans le profilé extérieur (4) du cadre support (3), en évitant des éléments de construction latéraux supérieurs et/ou inférieurs, et
le levier (21) est logé dans la ridelle (1) et la zone de logement (25) est située entre une partie courte du levier (23) avec une face frontale renflée et une partie plus longue du levier (24) munie d'une poignée et d'un système de verrouillage (26),
**caractérisée**
**en ce que**, pour obtenir le blocage, la face frontale (22) du levier (21) entre en prise dans une gorge (7), réalisée dans une branche horizontale (5) du profilé extérieur (4), et
**en ce que** la face frontale renflée (22) du levier (21) est située à une certaine distance en face d'un collet (15) de la ridelle (1), lequel, dans la position de fermeture, s'engage autour de la totalité de la branche verticale (6) du profilé extérieur (4).

2. Ridelle selon la revendication 1, **caractérisée en ce que**, dans la position de fermeture bloquée, le levier (21) est positionné dans le profilé formant la ridelle (1).
